# EUROPÄISCHE PATENTSCHRIFT

(11) **EP 1 308 416 B1**
(45) Veröffentlichungstag und Bekanntmachung des Hinweises auf die Patenterteilung: **02.11.2011**
(21) Anmeldenummer: 02019947.7
(22) Anmeldetag: 05.09.2002
(51) Int. Cl.: C01B 15/029, B01J 8/02

(54) **Direktsynthese von Wasserstoffperoxid und deren Integration in Oxidationsprozesse**
Direct synthesis of hydrogen peroxide and its integration in oxidation processes
Synthèse directe de péroxyde d'hydrogène et sa intégration dans des procédés d'oxidation

(30) Priorität: 30.10.2001 DE 10153546
(43) Veröffentlichungstag der Anmeldung: 07.05.2003
(73) Patentinhaber: Evonik Degussa GmbH, 45128 Essen (DE)
(72) Erfinder: Haas, Thomas, Dr., 60322 Frankfurt (DE); Stochniol, Guido, Dr., 63571 Gelnhausen (DE); Rollmann, Jürgen, 63762 Pflaumheim (DE)

(56) Entgegenhaltungen:
- EP-A- 1 038 833
- US-A- 3 361 533
- US-A- 4 336 238
- US-A- 5 500 202
- US-A1- 2001 003 578

## Beschreibung

Die Erfindung richtet sich auf ein Verfahren zur Herstellung von Wasserstoffperoxid durch Direktsynthese, wobei Wasserstoff und Sauerstoff in Gegenwart eines trägergebundenen oder trägerfreien Edelmetallkatalysators, der in einem Festbett angeordnet ist, und eines alkoholischen Lösungsmittels umgesetzt werden. Ein weiterer Gegenstand betrifft die Integration des erfindungsgemäßen Verfahrens in Oxidationsprozesse.

Es ist bekannt Wasserstoffperoxid nach dem Anthrachinon-Prozess herzustellen. Hierbei wird ein Anthrachinonderivat in organischer Phase hydriert, in einer Folgestufe mit einem sauerstoffhaltigen Gas oxidiert und anschließend aus der organischen Phase mit Wasser oder verdünnter Wasserstoffperoxidlösung extrahiert. Die so erhaltene wässrige Wasserstoffperoxidlösung wird üblicherweise auf eine Konzentration im Bereich von 30 bis 80 Gew.-% konzentriert.

Während in Bleichprozessen bei der Papierherstellung sowie in Abwasserreinigungsverfahren wässrige Wasserstoffperoxidlösungen zum Einsatz gelangen, ist es zur Durchführung von Oxidationsprozessen organischer Substrate unter Verwendung von Wasserstoffperoxid in Gegenwart eines Katalysators oft notwendig, die wässrige Wasserstoffperoxidlösung zunächst in eine organische Phase zu überführen. Demgemäß besteht zunehmend ein Bedarf an organischen oder organisch-wässrigen Wasserstoffperoxidlösungen, welche unmittelbar, also ohne vorherige Isolierung einer wässrigen Wasserstoffperoxidlösung einem Oxidationsprozess, der im wesentlichen in organischer Phase durchgeführt wird, zugeführt werden können.

Die EP 0 978 316 A1 lehrt ein integriertes Verfahren für einen katalytischen Oxidationsprozess eines organischen Substrats, dessen erste Stufe darin besteht, dass Wasserstoffperoxid durch Direktsynthese aus Wasserstoff und Sauerstoff in Gegenwart eines trägergebundenen Edelmetallkatalysators und eines organischen Lösungsmittels hergestellt wird. Die in dieser ersten Stufe gewonnene organische Wasserstoffperoxidlösung wird in einer sich unmittelbar anschließenden zweiten Stufe mit dem zu oxidierenden organischen Substrat in Gegenwart eines Oxidationskatalysators in Kontakt gebracht. Im Rahmen der Aufarbeitung des Reaktionsgemischs der Oxidationsstufe wird das bei der H₂O₂-Direktsynthese eingesetzte Lösungsmittel zurück gewonnen und in die erste Stufe rezykliert. Katalysator für die Direktsynthese ist ein Metall der Gruppe VIII, insbesondere Palladium, auf einem Aktivkohleträger, welcher Sulfonsäuregruppen aufweist. Der Katalysator wird in suspendierter Form eingesetzt, und zwar in einer Menge im Bereich von 10⁻⁶ bis 10⁻² Mol Metall pro 1 Reaktionsmedium. Lösungsmittel bei der Direktsynthese ist vorzugsweise Methanol. Bei den zu oxidierenden organischen Substraten handelt es sich um Olefine, aromatische Kohlenwasserstoffe, Ammoniak und Carbonylverbindungen, welche in Gegenwart eines Titansilikalit-Katalysators oxidiert werden. Ein Nachteil dieses Verfahrens besteht darin, dass es sich bei dem in der Direktsynthese eingesetzten Trägermaterial für den Katalysator um eine modifizierte Aktivkohle handelt, deren Herstellung aufwendig ist. Des weiteren erfordert das Verfahren aufwendige Filtrations- und Rückführungsmaßnahmen des Suspensionskatalysators. In einer technischen Anlage zur Direktsynthese von Wasserstoffperoxid unter Verwendung eines Katalysatorbetts aus diesem Aktivkohle-gebundenen Katalysator anstelle des entsprechenden Suspensionskatalysators könnte es zu einer unerwünschten und gegebenenfalls unkontrollierten Oxidation der Aktivkohle mittels als Nebenprodukt gebildeter Percarbonsäure kommen und zu einer Steigerung des Gefahrenpotentials führen.

Ein gleichfalls integriertes Verfahren, das eine Direktsynthese zur Herstellung von Wasserstoffperoxid und eine Epoxidation eines Olefins umfasst, ist aus der DE-OS 198 571 37 A1 bekannt. Die Direktsynthese erfolgt hier in einem alkoholischen oder wässrig-alkoholischen Medium, insbesondere Methanol, das als Stabilisator eine Mineralsäure und ein Alkalihalogenid enthält. Ausweislich der Beispiele lassen sich unter Einsatz eines Suspensionskatalysators und eines O₂/H₂-Gasgemischs (92:8) methanolische Wasserstoffperoxidlösungen mit einem H₂O₂-Gehalt im Bereich von 2 bis 6 Gew.-% gewinnen und in der Epoxidationsstufe einsetzen. Nachteilig an diesem Verfahren ist, dass die genannten hohen H₂O₂-Konzentrationen offensichtlich nur dann erhalten werden können, wenn ein Gasstrom aus Sauerstoff und Wasserstoff , der bereits im Explosionsbereich liegt, durch das Reaktionsmedium geleitet wird. In technischen Prozessen wird aber in der Regel versucht, außerhalb des Explosionsbereichs zu arbeiten, um aufwendige sicherheitstechnische Einrichtungen zur Durchführung des Verfahrens zu vermeiden.

In dem gleichfalls die Direktsynthese zur Herstellung von Wasserstoffperoxid und eine sich daran anschließende Epoxidation eines Olefins betreffenden US-Patent 5,840,934 wird die H₂O₂-Konzentration der bei der Direktsynthese in Gegenwart eines Palladiumkatalysators und Schwefelsäure sowie Natriumbromid als Stabilisatoren gewonnen methanolischen Wasserstoffperoxidlösung mit 0,15 bzw. 0,35 Gew.-% angegeben. Die Direktsynthese erfolgt in diesem Fall außerhalb der Explosionsgrenze. Aufgrund der niedrigen H₂O₂-Konzentration in der methanolischen Wasserstoffperoxidlösung erfolgt die Epoxidation in Gegenwart einer großen Menge des Lösungsmittels, was zu einer niedrigen Raum-Zeit-Ausbeute und damit erhöhten Betriebskosten führt.

Das US-Patent 4,336,238 beschreibt ein Verfahren zur Herstellung von H₂O₂-Lösungen in organisch-wässriger Lösung in Gegenwart eines Pd/C-Trägerkatalysators, der als Suspensionskatalysator oder als Festbettkatalysator zur Anwendung gelangt. Das in den Beispielen angegebene Gasgemisch aus H₂ und O₂ liegt stets im explosiven Bereich, was ein wesentlicher Nachteil ist. Unter den gewählten Betriebsbedingungen mit einem Festbettkatalystator wird zwar eine hohe Produktivität (kg H₂O₂/kg Pd·h) erzielt, die H₂O₂-Konzentration liegt aber unter 2 Gew.-%. Weitere Nachteile an diesem Verfahren sind die rasche Desaktivierung des Katalysators sowie der Edelmetallaustrag. In diesem Dokument wird auch der Einfluss der Säurekonzentration auf die Selektivität, die H₂O₂-Konzentration und Aktivität des Katalysators dargestellt. Die Aktivität eines desaktivierten Katalysators lässt sich dadurch wieder steigern, dass die Säurekonzentration des wässrig-organischen Mediums und/oder die Reaktionstemperatur über einen Zeitraum von mehreren Stunden deutlich erhöht werden. Im Anschluss an diese teilweise Aktivierung können die Säurekonzentration und/oder Temperatur wieder auf einen solchen Wert zurückgenommen werden, die im Hinblick auf die Herstellung einer Lösung mit höherer H₂O₂-Konzentration günstig sind. Nachteilig an diesem Verfahren sind die Erfordernisse, aufwendige Maßnahmen zur Reaktivierung des Katalysators sowie zur Rückgewinnung von mit der H₂O₂-Lösung ausgetragenem Edelmetall treffen zu müssen sowie die durch das Aktivkohleträgermaterial verursachten Sicherheitsprobleme.

Gemäß EP 0 049 806 A1 lassen sich bei der aus dem US-Patent 4,336,238 bekannten Direktsynthese die H₂O₂-Ausbeute steigern und der Pd-Austrag mindern, wenn Methanol anstelle von Wasser als Lösungsmittel verwendet wird. Zur Stabilisierung des Wasserstoffperoxids in Methanol wird diesem aber Formaldehyd zugesetzt. Die Anwesenheit von Formaldehyd in der methanolischen Wasserstoffperoxidlösung ist jedoch im Hinblick auf die Verwendung der so erhaltenen organischen Wasserstoffperoxidlösung als Oxidationsmittel nachteilig, weil es zu Nebenreaktionen und/oder zu einer Minderung der Ausbeute bezogen auf Wasserstoffperoxid kommen kann.

Gemäß DE-OS 196 427 70 lassen sich organische Wasserstoffperoxidlösungen mit einem Wasserstoffperoxidgehalt von wenigstens 2,5 Gew.-% durch Direktsynthese unter Verwendung von H₂/O₂-Gemischen außerhalb des Explosivbereichs erhalten, indem die Umsetzung in Gegenwart eines C₁ bis C₃-Alkanols als Reaktionsmedium an speziellen Katalysatorformkörpern , insbesondere monolithischen Formkörpern, durchgeführt wird. Zur Herstellung der beispielhaften methanolischen Wasserstoffperoxidlösungen mit 5,6 bis 7 Gew.-% Wasserstoffperoxid wird aber ein Gasgemisch über den Katalysator geleitet werden, das in den Explosionsbereich fällt. Die monolithischen Katalysatorformkörper sind teuer.

Wie aus den Beispielen 1 und 2 folgt, kommt es bei diesem Verfahren beim Dauerbetrieb zu einer starken Desaktivierung des Katalysators.

US 5 500 202 offenbart ein Verfahren zur Herstellung von Wasserstoffperoxidlösung in dem eine wässrige Lösung über einen Festbettkatalysator, über den auch H₂ und O₂ geleitet werden, rieselt.

Aufgabe der vorliegenden Erfindung ist es, ein weiteres Verfahren zur Direktsynthese von Wasserstoffperoxid aufzuzeigen, das die Herstellung von wässrig-organischen und organischen Wasserstoffperoxidlösungen mit einem H202-Gehalt von mindestens 3 Gew.-% gestattet, zu dessen Herstellung aber der Einsatz oder das Auftreten von Gasgemischen im Explosionsbereich zuverlässig vermieden werden kann. Eine weitere Aufgabe richtet sich darauf, das Verfahren derart zu gestalten, dass der Katalysator bei der Umsetzung von Wasserstoff und Sauerstoff eine hohe Selektivität und gleichzeitig eine hohe Standzeit und hohe Katalysatorproduktivität aufweist. Gemäß einer weiteren Aufgabe sollte sich das Verfahren auch zur Integration in ein Verfahren zur Oxidation eines organischen Substrats mit Wasserstoffperoxid eignen.

Diese und weitere Aufgaben, wie sie sich aus der nachfolgenden Beschreibung ergeben, werden durch das erfindungsgemäße Verfahren gelöst.

Gefunden wurde ein Verfahren zur Herstellung einer organischen oder organisch-wässrigen Wasserstoffperoxidlösung durch Direktsynthese, wobei Wasserstoff und Sauerstoff in Gegenwart von Hethanol über ein Festbett aus trägergebundenen Katalysatorpartikeln oder einem Gemisch aus katalysatorhaitigen und katalysatorfreien Partikeln geleitet werden, dadurch gekennzeichnet, dass man ein H₂ und O₂ enthaltendes nicht-explosives Gasgemisch einsetzt und ein Methanol mit einem Gehalt an Wasser von bis zu 20 Gew.-% und ein Bromid und/oder Jodid enthaltendes Reaktionsmedium mit einer Querschnittsbelastung von mindestens 0,3 m/h über das Festbett leitet, wobei das Gas-Flüssigkeits-Gemisch im Gleichstrom über das Katalysatorfestbett geleitet wird oder das Reaktionsmedium über das Katalysatorfestbett rieseln gelassen wird und das Gasgemisch im Gleichstrom oder im Gegenstrom durch das Katalysatorfestbett geleitet wird.

Durch die erfindungsgemäße Reaktionsführung gemäß dem Hauptanspruch sowie den bevorzugten Ausführungsformen gemäß den Unteransprüchen ist es möglich, bei der Direktsynthese außerhalb des explosiven Bereichs von Beginn an eine hohe Wasserstoffperoxidkonzentration in dem jeweiligen Lösungsmittel zu erhalten. Zudem lassen sich durch die erfindungsgemäßen Reaktionsbedingungen hohe Standzeiten des Katalysators erhalten. Bei der besonders bevorzugten Rieselbettfahrweise und einem Katalysatorbett, das ein oxidisches Material als Träger oder Verdünnungsmittel enthält, war kein Pd-Austrag feststellbar. Überraschenderweise kommt es im erfindungsgemäßen Verfahren trotz hoher Querschnittsbelastung weder zu einem Palladiumaustrag, noch zu einem Abfall der Katalysatoraktivität und Minderung der Standzeit des Katalysators.

Die maximale Querschnittsbelastung hängt insbesondere von der Körnung des Katalysatorfestbetts sowie von der Betriebsweise, nämlich Blasen- oder Rieselbettfahrweise ab. Bei der bevorzugten Rieselbettfahrweise, welche bezüglich des Gases im Gleichstrom oder Gegenstrom zur Flüssigkeit betrieben werden kann, liegt die Querschnittsbelastung unterhalb jenes Wertes, bei welchem sich die Flüssigkeit auf/in dem Festbett staut. Bei der Rieselbettfahrweise liegt die maximale Querschnittsbelastung bei üblicher Körnung des Festbetts meist unter 10 m/h, meist liegt sie im Bereich von 0,3 bis 5 m/h, insbesondere 0,3 bis 2 m/h. Eine Querschnittsbelastung von größer 2 m/h erfordert eine Partikelgröße von im allgemeinen um oder größer 2 mm. Bei einer Festbettpartikelgröße im Bereich von 0,1 bis 0,5 mm ist eine Querschnittsbelastung im Bereich von 0,4 bis 1 m/h bei der Gleichstromrieselbettfahrweise besonders geeignet.

Die erfindungsgemäße Flüssigkeitsquerschnittsbelastung lässt sich sowohl in wässrig-organischem als auch in organischem Medium, wie insbesondere einem alkoholischen Medium, das eine gewisse Menge Wasser, insbesondere gleich oder weniger als 20 Gew.-% enthalten kann, realisieren. Das erfindungsgemäße Verfahren hat bei der Herstellung organischer Wasserstoffperoxidlösungen mit gegebenenfalls geringem Gehalt an Wasser den Vorteil, dass derartige Lösungen mit einer Wasserstoffperoxidkonzentration im Bereich von vorzugsweise 4 bis 10 Gew.-% unmittelbar als Oxidationsmittel zur Durchführung von Oxidationsprozessen organischer Substrate, wie insbesondere zur Epoxidation von Olefinen, verwendet werden können.

Im erfindungsgemäßen Verfahren wird Methanol eingesetzt, welches das bei der Direktsynthese gebildete Wasserstoffperoxid sowie als Nebenprodukt gebildetes Wasser lösen kann. Im Hinblick auf die Verwendung der organischen Wasserstoffperoxidlösung ist es zweckmäßig, wenn der Wassergehalt im organischen Lösungsmittel nach Möglichkeit niedrig gehalten wird. Der Wassergehalt im organischen Medium wird auf max. 20 Gew.-%, vorzugsweise 10 Gew.-% begrenzt.

Bei dem in der erfindungsgemäßen Direktsynthese eingesetzten Katalysator kann es sich um einen im Stand der Technik bekannten Edelmetall enthaltenden Katalysator handeln, welcher sowohl trägerfrei als auch trägergebunden vorliegen kann. Besonders bevorzugt werden Katalysatoren, welche trägergebunden sind. Die katalytisch wirksame Komponente des Katalysators enthält ein oder mehrere Edelmetall in reiner Form oder in Form von Legierungen. Bevorzugte Edelmetalle sind die Platinmetalle, insbesondere Palladium und Platin, sowie Gold . Zusätzlich können Elemente aus der Reihe Rh, Ru, Ir, Cu und Ag anwesend sein. Besonders bevorzugte Katalysatoren enthalten als katalytisch wirksame Metall mindestens 80 Gew.-% Palladium und 0 - 20 Gew.-% Platin, sowie 0 - 20 Gew.-% Gold und/oder 0 -5 Gew.-% Silber in legierter oder unlegierter Form. Gemäß einer besonders bevorzugten Ausführungsform wird ein Katalysator-Festbett verwendet, dessen katalytisch wirksame Partikel hergestellt wurden durch ein Sprüh- oder Flammenpyrolyseverfahren gemäß EP 1 038 833 A1.

Die katalytisch wirksamen Edelmetallpartikel können sich auf der Oberfläche eines Trägermaterials befinden und/oder in gleichmäßiger Verteilung innerhalb einer Schüttung eines inerten Trägermaterials angeordnet sein.

Bei den Trägern handelt es sich um partikelförmige Materialien wie Pulver, Extrudate, Granulate oder andere aus einem pulverförmigen Material gebildete Formkörper, ausgenommen monolithische Formkörper. Es ist möglich, die in feinstverteilter Form vorliegende katalytische wirksame Komponente mit einem pulverförmigen Trägermaterial zu vermischen, das Gemisch zu plastifizieren, zu verformen und die Formlinge durch eine Kalzination zu verfestigen. Gemäß einer Alternative ist es auch möglich, einen bereits vorgefertigten geformten Träger mit einer die feinstverteilte katalytisch wirksame Komponente enthaltenden Suspension zu imprägnieren, wobei ein sogenannter Egg-Shell-Katalysator erhalten werden. Bei der Applizierung des katalytisch wirksamen Materials auf bzw. in dem Trägermaterial können auch bekannte Bindemittel, wie Wasserglas, Kalziumoxalat, Borsäure und andere glasbildende Zusammensetzungen, zugegen sein. Üblicherweise schließt sich an das Aufbringen des katalytisch wirksamen Materials auf ein Trägermaterial ein Kalzinierschritt bei 300 bis 600 °C an. Schließlich lassen sich die katalytisch wirksamen Trägerkatalysatoren auch durch Imprägnierung des Trägers mit einer Lösung, welche eine Verbindung der katalytisch wirksamen Metalle enthält, und sich anschließende Hydrier-, Kalzinier- und Waschschritte gewinnen.

Besonders bevorzugt wird ein trägergebundener Katalysator verwendet, wobei das oder die katalytisch wirksame(n) Metall(e) und gegebenenfalls ein oder mehrere Promotoren in an sich bekannter Weise auf das Trägermaterial aufgebracht worden sind, oder katalytisch wirksame Edelmetallpartikel bereits bei der Herstellung des Trägermaterials sich auf der Oberfläche desselben niederschlagen haben (siehe EP 1 038 833 A1).

Bei dem bevorzugten oxidischen oder silikatischen Trägermaterial handelt es sich insbesondere um Aluminiumoxid, Kieselsäure, Titandioxid, Zirkoniumdioxid und Zeolithe. Die Größe der Partikel im Festbett kann in weiten Bereichen, insbesondere 0,1.bis 10mm, liegen; eine geringe Partikelgröße führt zu einem höheren Druckabfall, bei zu großer Partikelgröße nimmt die katalytisch wirksame Oberfläche ab. Eine Körnung im Bereich von 0,1 bis 5 mm, insbesondere 0,1 bis 2 mm und besonders bevorzugt 0,1 bis 0,5 mm führt zu hohen Produktivitäten.

Wie dies aus dem Stand der Technik allgemein bekannt ist, erfolgt die Direktsynthese im allgemeinen in Gegenwart geeigneter Stabilisatoren für Wasserstoffperoxid, um eine Zersetzung desselben während und/oder nach der Herstellung zu vermeiden oder zumindest zu reduzieren. Unter den Stabilisatoren sind vorzugsweise starke Säuren anwesend, insbesondere eine Mineralsäure, wie Schwefelsäure, Phosphorsäure und Salzsäure; einsetzbar sind auch im Medium lösliche Sulfonsäuren, Phosphonsäuren und Carbonsäuren. Die Säurekonzentration im organischen oder organisch-wässrigen flüssigen Medium, das gebildetes Wasserstoffperoxid aufnimmt, kann in weiten Bereichen liegen, insbesondere im Bereich von 1 bis 0,0001 Äquivalente/1; in der,Praxis werden meist 0,1 bis 0,001 Äquivalente Säure pro 1 Medium eingesetzt. Niedrigere Säurekonzentrationen werden im Hinblick auf die Weiterverwendung der gebildeten Wasserstoffperoxidlösung bevorzugt.

Bei einer weiteren Klasse von Stabilisatoren, welche sich bei der erfindungsgemäßen Direktsynthese bewährt haben, handelt es sich um Halogenide, insbesondere um Bromid und Jodid. Derartige Halogenide, welche in einer Konzentration im Bereich von 10⁻¹ bis 10⁻⁷ Äquivalente/l, insbesondere 10⁻² bis 10⁻⁶ Äquivalente/l im flüssigen Medium enthalten sind, werden oft gemeinsam mit einem Säurestabilisator eingesetzt. Besonders bevorzugt werden 0,001 bis 0,0001 Äquivalente Bromid und 0,02 bis 0,05 Äquivalente einer Mineralsäure, insbesondere Schwefelsäure, eingesetzt.

Unter Verwendung eines Festbettreaktors kann das Gas-Flüssigkeits-Gemisch im Gleichstrom über das Festbett geleitet werden. Gemäß einer alternativen Ausführungsform wird eine die Stabilisatoren enthaltende wässrig-organische oder organische Lösung über das Katalysatorbett rieseln gelassen und das Reaktionsgas im Gleichstrom oder im Gegenstrom durch das Katalysatorbett geleitet. Obgleich es im erfindungsgemäßen Verfahren im Prinzip möglich ist, ein Wasserstoff und Sauerstoff enthaltendes Gasgemisch, das im explosiven Bereich liegt, einzusetzen, wird bevorzugt ein Gasgemisch verwendet, das auch unter Berücksichtigung des sich einstellenden Lösungsmittelpartialdrucks zuverlässig außerhalb der Explosionsgrenze liegt. Der Wasserstoffgehalt im zu verwendenden Gasgemisch, das zweckmäßiger Weise auch Intertgase enthält, wird auf Werte um/unter 6 Volumen-% begrenzt, vorzugsweise um/unter 5 Volumen-%. Insbesondere liegt der H₂-Gehalt im Bereich von 3 bis 5 Volumen-%. Der Sauerstoffgehalt im Gasgemisch kann stöchiometrisch oder überstöchiometrisch sein. Zweckmäßigerweise wird Sauerstoff ausschließlich oder überwiegend in Form von Luft eingesetzt. Der Sauerstoffgehalt im einzusetzenden Gasgemisch liegt im allgemeinen im Bereich von 10 bis 50 Volumen-%, insbesondere 15 bis 30 Volumen-%.

Die Bedingungen bezüglich Druck und Temperatur entsprechen jenen, die aus dem Stand der Technik bekannt sind. So liegt die Reaktionstemperatur im allgemeinen im Bereich von 0 bis 90 °C; bevorzugt wird ein Temperaturbereich von 20 bis 50 °C. Der Druck liegt im allgemeinen im Bereich von Atmosphärendruck oder geringem Unterdruck bis etwa 10 MPa. Vorzugsweise wird die Umsetzung bei einem Druck im Bereich von 0,5 bis 5 MPa durchgeführt.

Das erfindungsgemäße Verfahren lässt sich in besonders vorteilhafter Weise in ein Gesamtverfahren zur Oxidation eines organischen Substrats mit Wasserstoffperoxid integrieren. Gefunden wurde demgemäß ein Verfahren zur katalytischen Oxidation eines organischen Substrats aus der Reihe der Olefine, aromatischen Kohlenwasserstoffe, die ein oder mehrere Substituenten aus der Reihe der Alkyl-, Alkoxy- und Hydroxylgruppen aufweisen können, und Carbonylverbindungen mit einer organischen Wasserstoffperoxidlösung, welche bis zu 20 Gew.-% Wasser , vorzugsweise aber weniger als 10 Gew.-% Wasser enthalten kann. Die Oxidation erfolgt in Gegenwart eines Oxidationskatalysator, insbesondere eines solchen aus der Reihe der Titan- oder Vanadiumsilikalite sowie andere Vanadium-, Molybdän- und/oder Wolframverbindungen. Als Oxidationsmittel wird eine unmittelbar vor der Oxidation hergestellte, gegebenenfalls wasserhaltige alkoholische Wasserstoffperoxidlösung verwendet, welche nach dem zuvor beschriebenen Verfahren erzeugt wurde.

Die Erfindung wird durch die nachfolgenden Beispiele und Vergleichsbeispiele verdeutlicht.

### Beispiele:

### Allgemeine Vorschrift:

Als Katalysatoren wurden Mischungen von Metall- und Inertpartikeln eingesetzt. Katalytisch wirksame Partikel aus 95 % Pd und 5 % Au wurden in Analogie zu DE 199 12 733 hergestellt. Als Inertmaterial wurde granulatförmiges alpha-Aluminiumoxid der Firma Ceramtech AG mit der Bezeichnung "Stemalox-Sprühkorn, gebrannt 0 - 0,5 mm A1203-Gehalt 85%" verwendet. Vor dem Einsatz wurde das Granulat durch Sieben von der Fraktion < 0,1mm befreit. Das sehr feinteilige metallische Katalysatorpulver wurde mit einem oxidischen Trägerpulver gemischt.

Der Pd-Gehalt der Mischung aus Katalysator- und inerten Partikeln betrug im Falle der Versuche mit Wasser als Lösungsmittel 2,5 Gew.-%, im Falle der Versuche mit Methanol als Lösungsmittel 0,25 Gew.-%.

Alle Versuche zur Direktsynthese, außer Beispiel 2, wurden in einem Rieselbettreaktor mit 16 mm Innendurchmesser und 40 cm Länge durchgeführt. Die eingesetzte Katalysatormasse betrüg 148 g bei einem Schüttgutvolumen von etwa 80 ml. Der Druck betrug 5 MPa (50 bar), die Strömungsgeschwindigkeit des flüssigen Reaktionsmediums, also des Lösungsmittels für H₂O₂, betrug 30 - 120 ml / h, die des Gases 230 Nl/h. Das Gas bestand aus 3 Vol.-% Wasserstoff, 20 Vol.-% Sauerstoff sowie 77 Vol.-% Stickstoff und wurde im Gleichstrom zu dem über das Festbett rieselnden flüssigen Reaktionsmedium geleitet. Die Reaktionstemperatur betrug 25 °C. Das Lösungsmittel für H₂O₂ enthielt außerdem Natriumbromid und H₂SO₄.

### Vergleichsbeispiel 1:

Als Lösungsmittel am Eingang des Rieselbettreaktors wurde Wasser mit 0,001 mol/l Bromid und 0,01 mol/l Schwefelsäure gewählt. Die Strömungsgeschwindigkeit des Lösungsmittels für H₂O₂ betrug 120 ml/h, die des Gases 230 Nl/h. Aus der Strömungsgeschwindigkeit der Flüssigkeit und dem

Reaktorquerschnitt ergibt sich eine Flüssigkeitsquerschnittsbelastung von 0,6 m/h.

Der H₂-Umsatz betrug 70 %. Die H₂O₂-Selektivität bezüglich des umgesetzten H₂ betrug 71 %. Die H₂O₂-Konzentration am Ende des Reaktors war 4,95 Gew.-%. Die Palladiumproduktivität betrug 1,6 gH₂O₂/gPd/h.

### Beispiel 1:

Als Lösungsmittel am Eingang des Rieselbettreaktors wurde Methanol mit 0,0002 mol/l Bromid und 0,01 mol/l Schwefelsäure gewählt. Die Strömungsgeschwindigkeit des Lösungsmittels für H₂O₂ betrug 120 ml / h, die des Gases 230 Nl/h. Aus der Strömungsgeschwindigkeit der Flüssigkeit und dem Reaktorquerschnitt ergibt sich eine Flüssigkeitsquerschnittsbelastung von 0,6 m/h.

Nach 10h betrug der H₂-Umsatz 67 %. Die H₂O₂-Selektivität bezüglich des umgesetzten H₂ betrug 72 %. Die H₂O₂-Konzentration am Ende des Reaktors war 5,11 Gew.-%. Die Palladiumproduktivität betrug 13,8 gH₂O₂/gPd·h. Diese Werte waren selbst nach 2000 h Versuchszeit noch unverändert. Der Katalysator erbrachte damit auch nach langer Betriebszeit eine hohe Produktivität. In der methanolischen Wasserstoffperoxidlösung konnte kein Pd nachgewiesen werden (Nachweisgrenze 0,01 ppm).

### Beispiel 2:

Der Versuch wurde in einem Rieselbettreaktor mit 8,8 mm Innendurchmesser und 40 cm Länge durchgeführt. Die eingesetzte Katalysatormasse betrug 30 g bei einem Schüttgutvolumen von etwa 17,5 ml.

Als Lösungsmittel am Eingang des Rieselbettreaktors wurde Methanol mit 0,0002 mol/l Bromid und 0,01 mol/l Schwefelsäure gewählt. Die Strömungsgeschwindigkeit des Lösungsmittels für H₂O₂ betrug 30 ml/h, die des Gases 55 Nl/h. Aus der Strömungsgeschwindigkeit der Flüssigkeit und dem Reaktorquerschnitt ergibt sich eine Flüssigkeitsquerschnittsbelastung von 0,5 m/h.

Der H₂-Umsatz betrug 68 %. Die H₂O₂-Selektivität bezüglich des umgesetzten H₂ betrug 70 %. Die H₂O₂-Konzentration am Ende des Reaktors war 4,9 Gew.-%. Die Palladiumproduktivität betrug 16,5 gH₂O₂/gPd·h.

### Vergleichsbeispiel 2:

Als Lösungsmittel am Eingang des Rieselbettreaktors wurde Methanol mit 0,0002 mol/l Bromid und 0,01 mol/l Schwefelsäure gewählt. Die Strömungsgeschwindigkeit des Lösungsmittels für H₂O₂ betrug 30 ml/h, die des Gases 230 Nl/h. Aus der Strömungsgeschwindigkeit der Flüssigkeit und dem Reaktorquerschnitt ergibt sich eine Flüssigkeitsquerschnittsbelastung von 0,15 m/h.

Der H₂-Umsatz betrug 47 %. Die H₂O₂-Selektivität bezüglich des umgesetzten H₂ betrug 29 %. Die H₂O₂-Konzentration am Ende des Reaktors war 5,88 Gew.-%. Die Palladiumproduktivität betrug 4,1 gH₂O₂/gPd·h.

### Vergleichsbeispiel 3:

Als Lösungsmittel am Eingang des Rieselbettreaktors wurde Wasser mit 0,001 mol/l Bromid und 0,01 mol/l Schwefelsäure gewählt. Die Strömungsgeschwindigkeit des Lösungsmittels für H₂O₂ betrug 93 ml/h, die des Gases 232 Nl/h. Aus der Strömungsgeschwindigkeit der Flüssigkeit und dem Reaktorquerschnitt ergibt sich eine Flüssigkeitsquerschnittsbelastung von 0,47 m/h.

Der H₂-Umsatz betrug 68 %. Die H₂O₂-Selektivität bezüglich des umgesetzten H₂ betrug 57 %. Die H₂O₂-Konzentration am Ende des Reaktors war 5,16 Gew.-%. Die Palladiumproduktivität betrug 1,4 gH₂O₂/gPd·h.

Wie aus den Beispielen 1 und 2 im Vergleich zu den Vergleichsbeispielen 1 und 3 folgt, ist die Palladiumproduktivität im erfindungsgemäßen Verfahren etwa 10 mal höher als im Verfahren bei der Verwendung von Wasser als Lösungsmittel. Dies führt zu einem geringeren Einsatz des teuren Palladiums. Der Vergleich des Vergleichsbeispiels 2 mit den Beispielen 1 und 2 zeigt, dass eine Flüssigkeitsquerschnittsbelastung unter 0,3 m/h zu einer wesentlich geringeren Palladiumproduktivität führt.

## Patentansprüche

1. Verfahren zur Herstellung einer organischen oder organisch-wässrigen Wasserstoffperoxidlösung durch Direktsynthese, wobei Wasserstoff und Sauerstoff in Gegenwart von Methanol über ein Festbett aus trägergebundenen Katalysatorpartikeln oder einem Gemisch aus katalysatorhaltigen und katalysatorfreien Partikeln geleitet werden,
**dadurch gekennzeichnet,**
**dass** man ein H₂ und O₂ enthaltendes nicht-explosives Gasgemisch einsetzt und ein Methanol mit einem Gehalt an Wasser von bis zu 20 Gew.-% und ein Bromid und/oder Jodid enthaltendes Reaktionsmedium mit einer Querschnittsbelastung von mindestens 0,3 m/h über das Festbett leitet, wobei das Gas-Flüssigkeits-Gemisch im Gleichstrom über das Katalysatorfestbett geleitet wird oder das Reaktionsmedium über das Katalysatorfestbett rieseln gelassen wird und das Gasgemisch im Gleichstrom oder im Gegenstrom durch das Katalysatorfestbett geleitet wird.

2. Verfahren nach Anspruch 1,
**dadurch gekennzeichnet,**
**dass** man ein Katalysatorfestbett verwendet, dessen Partikel einen Durchmesser von kleiner 2 mm, insbesondere kleiner 0,5 mm aufweisen.

3. Verfahren nach einem der Ansprüche 1 oder 2,
**dadurch gekennzeichnet,**
**dass** man das Katalysatorfestbett in Rieselbettfahrweise betreibt und das Reaktionsmedium mit einer Querschnittsbelastung im Bereich von 0,3 bis 2 m/h, insbesondere 0,4 bis 1 m/h, auf das Festbett aufgibt.

4. Verfahren nach einem der Ansprüche 1 bis 3,
**dadurch gekennzeichnet,**
**dass** man ein Reaktionsmedium verwendet, das pro 1 10⁻² bis 10⁻⁷ Äquivalente, insbesondere 10-2. bis 10⁻⁶ Äquivalente Bromid enthält.

5. Verfahren nach einem der Ansprüche 1 bis 4,
**dadurch gekennzeichnet,**
**dass** man ein Reaktionsmedium verwendet, das eine Säure aus der Reihe der Mineralsäuren, ausgenommen Chlorwasserstoffsäure, der Sulfonsäuren und Phosphonsäuren in einer Menge von 0,1 bis 0,001 Äquivalente/1 enthält.

6. Verfahren nach einem der Ansprüche 1 bis 5,
**dadurch gekennzeichnet,**
**dass** man einen trägergebundenen Katalysator verwendet, wobei es sich bei dem Trägermaterial um ein oxidisches oder silikatisches Material, insbesondere ein Material aus der Reihe Al₂O₃, SiO₂, TiO₂,- ZrO₂ und Zeolithe, und bei dem katalytisch wirksamen Metall um ein oder mehrere Edelmetalle handelt, insbesondere um solche aus der Reihe Palladium, Platin und Gold, und Elemente aus der Reihe Rh, Ru, Ir, Cu und Ag als Promotoren anwesend sein können.

7. Verfahren nach einem der Ansprüche 1 bis 6,
**dadurch gekennzeichnet,**
**dass** man ein Festbett verwendet, das im wesentlichen aus Edelmetallpartikeln, insbesondere Pd-Partikeln oder Partikeln aus Pd und einem oder mehreren Promotoren wie insbesondere Pt und/oder Gold, und Partikeln aus einem oxidischen oder silikalitischen Material besteht.

8. Verfahren zur katalytischen Oxidation eines organischen Substrats aus der Reihe der Olefine, aromatischen Kohlenwasserstoffe, die Substituenten aus der Reihe Alkyl, Alkoxy und Hydroxyl aufweisen können, und Carbonylverbindungen mit einer organischen Wasserstoffperoxidlösung
**dadurch gekennzeichnet,**
**dass** man ein H₂ und O₂ enthaltendes nicht-explosives Gasgemisch und ein Methanol mit einem Gehalt an Wasser von bis zu 20 Gew.-% und ein Bromid und/oder Jodid enthaltendes Reaktionsmedium im Gleichstrom mit einer Querschnittsbelastung von mindestens 0,3 m/h über ein Festbett aus trägergebundenen Katalysatorpartikeln oder einem Gemisch aus katalysatorhaltigen und katalysatorfreien Partikeln leitet und die so hergestellte organische Wasserstoffperoxidlösung, welche zusätzlich bis zu 20 Gew.-% Wasser enthalten kann, mit dem organischen Substrat in Gegenwart eines Oxidationskatalysators aus der Reihe der Titansilikalite, Vanadium-, Molybdän- und/oder Wolframverbindungen umsetzt, wobei die organische Wasserstoffperoxidlösung unmittelbar vor der Umsetzung mit dem organischen Substrat hergestellt wird.

## Claims

1. Process for preparing an organic or organic-aqueous hydrogen peroxide solution by direct synthesis, comprising passing hydrogen and oxygen in the presence of methanol over a fixed bed of support-bound catalyst particles or of a mixture of catalyst-containing and catalyst-free particles,
**characterized in that** a non-explosive gas mixture comprising H₂ and O₂ is used and a reaction medium comprising methanol having a water content of up to 20% by weight and a bromide and/or iodide are passed over the fixed bed with a cross-sectional loading of at least 0.3 m/h, the gas/liquid mixture being passed in co-current over the fixed catalyst bed, or the reaction medium being trickled over the fixed catalyst bed and the gas mixture being passed in co-current or in countercurrent through the fixed catalyst bed.

2. Process according to Claim 1, **characterized in that** a fixed catalyst bed is used whose particles have a diameter of less than 2 mm, more particularly less than 0.5 mm.

3. Process according to either of Claims 1 and 2, **characterized in that** the fixed catalyst bed is operated in trickle bed mode and the reaction medium is applied to the fixed bed with a cross-sectional loading in the range from 0.3 to 2 m/h, more particularly 0.4 to 1 m/h.

4. Process according to any of Claims 1 to 3, **characterized in that** a reaction medium is used which comprises 10⁻² to 10⁻⁷ equivalents, more particularly 10⁻² to 10⁻⁶ equivalents, of bromide per 1.

5. Process according to any of Claims 1 to 4, **characterized in that** a reaction medium is used which comprises an acid from the series consisting of mineral acids, excluding hydrochloric acid, sulphonic acids and phosphonic acids in an amount of 0.1 to 0.001 equivalents/1.

6. Process according to any of Claims 1 to 5, **characterized in that** a support-bound catalyst is used, the support material being an oxidic or silicatic material, more particularly a material from the series consisting of Al₂O₃, SiO₂, TiO₂, ZrO₂ and zeolites, and the catalytically active metal being one or more noble metals, more particularly noble metals from the series consisting of palladium, platinum and gold, and elements from the series consisting of Rh, Ru, Ir, Cu and Ag may be present as promoters.

7. Process according to any of Claims 1 to 6, **characterized in that** a fixed bed is used which consists substantially of noble metal particles, more particularly Pd particles or particles of Pd and one or more promoters such as, more particularly, Pt and/or gold, and particles of an oxidic or silicatic material.

8. Process for the catalytic oxidation of an organic substrate from the series consisting of olefins, aromatic hydrocarbons, which may have substituents from the series consisting of alkyl, alkoxy and hydroxyl, and carbonyl compounds, using an organic hydrogen peroxide solution,
**characterized**
**in that** a non-explosive gas mixture comprising H₂ and O₂, and a reaction medium comprising methanol having a water content of up to 20% by weight and a bromide and/or iodide are passed in co-current with a cross-sectional loading of at least 0.3 m/h over a fixed bed of support-bound catalyst particles or of a mixture of catalyst-containing and catalyst-free particles, and the organic hydrogen peroxide solution thus prepared, which may additionally contain up to 20% by weight of water, is reacted with the organic substrate in the presence of an oxidation catalyst from the series consisting of titanium silicalites, vanadium compounds, molybdenum compounds and/or tungsten compounds, the organic hydrogen peroxide solution being prepared immediately before the reaction with the organic substrate.

## Revendications

1. Procédé pour la production d'une solution organique ou aqueuse-organique de peroxyde d'hydrogène par synthèse directe, de l'hydrogène et de l'oxygène étant envoyés en présence de méthanol sur un lit fixe de particules de catalyseur fixé sur support ou d'un mélange de particules contenant un catalyseur et de particules exemptes de catalyseur,
**caractérisé en ce qu'**on utilise un mélange gazeux non explosif contenant H₂ et O₂ et on envoie sur le lit fixe, à une charge sur section transversale d'au moins 0,3 m/h, un milieu réactionnel contenant du méthanol ayant une teneur en eau allant jusqu'à 20 % en poids et un bromure et/ou iodure, en envoyant le mélange gaz-liquide en co-courant sur le lit fixe de catalyseur ou en faisant ruisseler le milieu réactionnel sur le lit fixe de catalyseur et en faisant passer le mélange gazeux en co-courant ou à contre-courant à travers le lit fixe de catalyseur.

2. Procédé selon la revendication 1, **caractérisé en ce qu'**on utilise un lit fixe de catalyseur dont les particules présentent un diamètre inférieur à 2 mm, en particulier inférieur à 0,5 mm.

3. Procédé selon l'une quelconque des revendications 1 ou 2, **caractérisé en ce qu'**on fait fonctionner le lit fixe de catalyseur en mode d'opération en lit à ruissellement et on fait passer sur le lit fixe le milieu réactionnel à une charge sur section transversale dans la plage de 0,3 à 2 m/h, en particulier de 0,4 à 1 m/h.

4. Procédé selon l'une quelconque des revendications 1 à 3, **caractérisé en ce qu'**on utilise un milieu réactionnel qui contient par litre 10⁻² à 10⁻⁷ équivalent, en particulier 10⁻² à 10⁻⁶ équivalent de bromure.

5. Procédé selon l'une quelconque des revendications 1 à 4, **caractérisé en ce qu'**on utilise un milieu réactionnel qui contient un acide choisi dans la série des acides minéraux, l'acide chlorhydrique excepté, des acides sulfoniques et des acides phosphoniques, en une quantité de 0,1 1 à 0,001 équivalent/l.

6. Procédé selon l'une quelconque des revendications 1 à 5, **caractérisé en ce qu'**on utilise un catalyseur fixé sur support, la matière de support consistant en une matière de type oxyde ou de type silicate, en particulier une matière choisie dans la série constituée par Al₂O₃, SiO₂, TiO₂, ZrO₂ et les zéolithes, et le métal à activité catalytique consistant en un ou plusieurs métaux nobles, notamment en ceux de la série constituée par le palladium, le platine et l'or, et des éléments de la série Rh, Ru, Ir, Cu et Ag pouvant être présents en tant que promoteurs.

7. Procédé selon l'une quelconque des revendications 1 à 6, **caractérisé en ce qu'**on utilise un lit fixe qui est essentiellement constitué de particules de métaux nobles, en particulier des particules de Pd ou des particules de Pd et d'un ou plusieurs promoteurs tels qu'en particulier le platine et/ou l'or, et de particules d'une matière de type oxyde ou silicate.

8. Procédé pour l'oxydation catalytique d'un substrat organique choisi dans la série des oléfines, des hydrocarbures aromatiques, qui peuvent comporter des substituants choisis dans la série constituée par des groupes alkyle, alcoxy et hydroxy, et des composés carbonyle, à l'aide d'une solution organique de peroxyde d'hydrogène,
**caractérisé en ce qu'**on envoie en co-courant un mélange gazeux non explosif contenant H₂ et O₂ et un milieu réactionnel contenant du méthanol ayant une teneur en eau allant jusqu'à 20 % en poids et un bromure et/ou iodure, à une charge sur section transversale d'au moins 0,3 m/h, sur un lit fixe de particules de catalyseur fixé sur support ou d'un mélange de particules contenant un catalyseur et de particules exemptes de catalyseur et on fait réagir la solution organique de peroxyde d'hydrogène ainsi produite, qui peut en outre contenir jusqu'à 20 % en poids d'eau, avec le substrat organique en présence d'un catalyseur d'oxydation choisi dans la série des silicalites de titane, des composés du vanadium, molybdène et/ou tungstène, la solution organique de peroxyde d'hydrogène étant préparée immédiatement avant la réaction avec le substrat organique.
